# EUROPÄISCHE PATENTSCHRIFT

(11) **EP 0 530 471 B1**
(45) Veröffentlichungstag und Bekanntmachung des Hinweises auf die Patenterteilung: **08.03.1995**
(21) Anmeldenummer: 92111933.5
(22) Anmeldetag: 14.07.1992
(51) Int. Cl.: G05D 23/13

(54) **Stellvorrichtung für ein Mischventil**
Actuating device for a mixing valve
Dispositif de commande pour une soupape de mélange

(30) Priorität: 18.07.1991 DE 4123856
(43) Veröffentlichungstag der Anmeldung: 10.03.1993
(73) Patentinhaber: FRIEDRICH GROHE AKTIENGESELLSCHAFT, D-58675 Hemer (DE)
(72) Erfinder: Kostorz, Jan Ryszard, W-5750 Menden 2 (DE); Frankholz, Christian, W-5840 Schwerte (DE)

(56) Entgegenhaltungen:
- EP-A- 0 461 536
- DE-A- 1 161 460
- DE-A- 3 530 812
- FR-A- 1 310 027
- GB-A- 2 172 382

## Beschreibung

Die Erfindung bezieht sich auf eine Sollwerteinstellvorrichtung an einem thermostatisch geregelten Mischventil für Kalt- und Warmwasser, mit einer auf einem feststehenden Kopfstück mittels Gewinde schraubbaren Stellmutter, auf der eine Haube drehfest gehaltert ist, die mit einem feststehenden Anschlagring, der die maximale Drehbewegung begrenzt, und einer Skalenanordnung zusammenwirkt, wobei ein von Hand lösbarer Anschlag als zusätzliche Drehbegrenzung vorgesehen ist.

Eine derartige Vorrichtung ist aus der Druckschrift DE 35 30 812 A1 bekannt. Bei dieser bekannten Ausbildung wird bei der Temperatureinstellung der Stellgriff entsprechend der Gewindesteigung am Kopfstück axial zum Mischventil verschoben, was vielfach als nachteilig angesehen wird. Außerdem ist bei dieser Ausbildung eine wahlweise Einstellung des von Hand lösbaren Sicherheitsanschlags auf verschiedene Temperaturwerte nicht vorgesehen.

Bei einer anderen Sollwerteinstellvorrichtung (deutsche Auslegeschrift 1 161 460) ist zwar schon eine einstellbare Sicherheitsanschlageinrichtung bekanntgeworden.

Diese Einrichtung ist aber so gut wie nicht geeignet für den Einsatz bei der eingangs angegebenen Sollwerteinstellvorrichtung.

Der Erfindung liegt die Aufgabe zugrunde, die im Oberbegriff des Anspruchs 1 angegebene Einstellvorrichtung zu verbessern, wobei es mit zur Aufgabe gehört, den Sicherheitsanschlag bzw. den lösbaren Anschlag verstellbar auszubilden.

Diese Aufgabe wird erfindungsgemäß dadurch gelöst, daß
- die Haube am Anschlagring axial gehaltert ist und einen ringförmigen Schlitz in einem Teilbereich einer von einer Durchmesserverringerung gebildeten Stirnseite trägt,
- an der Haube eine Griffkappe in verschiedenen Drehstellungen fixierbar ist,
- an der Griffkappe ein von Hand durch eine Radialbewegung aus seiner Anschlagposition zu einer Anschlagnase auslenkbarer Anschlag vorgesehen ist, welcher durch den Schlitz in der Haube vorkragt und mit einer am Anschlagring angeformten Anschlagnase zusammenwirkt, wobei die Größe und die Lage des Einstellbereichs des lösbaren Anschlags im wesentlichen von der Größe und der Lage des Schlitzes vorgegeben ist.

Weitere Ausgestaltungen der Erfindung sind in den Ansprüchen 2 bis 9 angegeben.

Mit dieser Ausbildung wird erreicht, daß der Temperaturskalengriff, bestehend aus einer Haube und einer Griffkappe, bei der Temperatureinstellung, die mit einer Drehbewegung des Griffstücks erfolgt, axial zum Kopfstück die gleiche Position beibehält bzw. der Skalengriff nichtsteigend zum Mischventil angeordnet ist, so daß ein definierter, gleichbleibender Spalt zwischen dem Temperaturskalengriff und dem Armaturenkörper ermöglicht ist.
Durch die Unterteilung des Griffstücks in eine Haube und eine Griffkappe ist ein einfaches und bequemes Einstellen des Sicherheitsanschlags in einem Bereich von 30° C bis 50° C möglich.
Die Griffkappe kann in verschiedenen Drehwinkelstellungen auf die Haube aufsteckbar ausgebildet sein. Alternativ kann aber auch die Griffkappe axial begrenzt verschiebbar auf der Haube angeordnet werden, wobei dann in einer ersten verrasteten Axialstellung die Griffkappe drehfest mit der Haube verbunden ist, während sie in der anderen Axialstellung drehbar auf der Haube gehaltert ist, so daß ein Verlorengehen der Griffkappe ausgeschlossen wird.
Zweckmäßig können die Teile des Temperaturskalengriffes, insbesondere der Haube, aus Kunststoff hergestellt werden.

Ausführungsbeispiele der Erfindung sind in der Zeichnung dargestellt und werden im folgenden näher beschrieben. Es zeigt
- Figur 1: eine Sollwerteinstellvorrichtung an einem zum Teil dargestellten Mischventil im Längsschnitt;
- Figur 2: die Sollwerteinstellvorrichtung gemäß Figur 1 in der Schnittebene II;
- Figur 3: die in Figur 1 dargestellte Sollwerteinstellvorrichtung mit auseinandergezogenen Einzelteilen in Perspektivansicht;
- Figur 4: ein weiteres Ausführungsbeispiel einer Sollwerteinstellvorrichtung mit einem zum Teil dargestellten Mischventil im Längsschnitt.

Der Einfachheit halber sind bei den Ausführungsbeispielen in der Zeichnung gleiche oder entsprechende Elemente mit jeweils gleichen Bezugszeichen versehen.

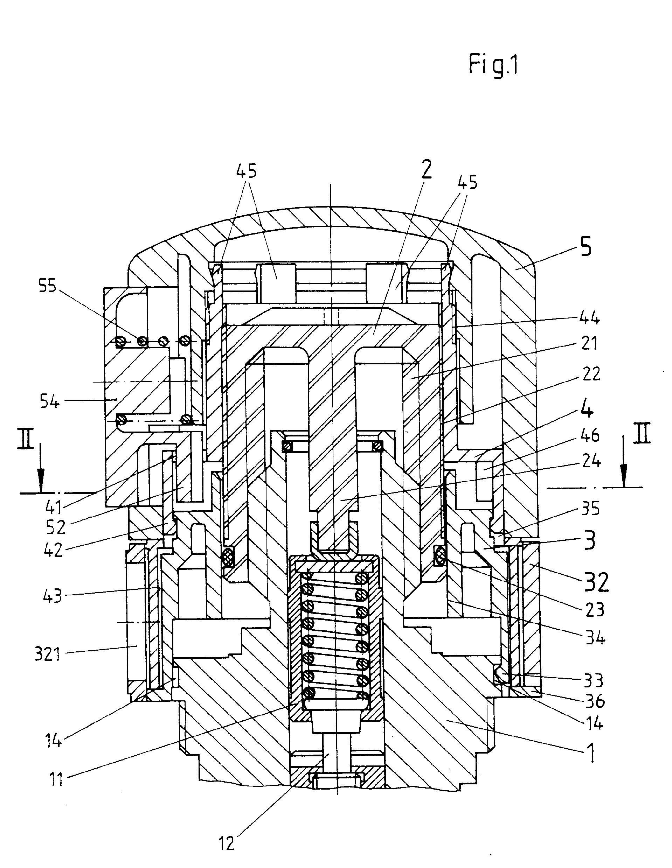

Die in den Figuren 1 bis 3 dargestellte Sollwerteinstellvorrichtung ist an einem Kopfstück 1 eines in der Zeichnung nicht näher dargestellten thermostatisch geregelten Mischventils für Kalt- und Warmwasser, wie es beispielsweise aus der Druckschrift DE 35 30 812 A1 bekannt ist, angeordnet. Auf dem Kopfstück 1 ist dabei eine Stellmutter 2 mit einem Gewinde 21 axial beweglich angeordnet. Die Stellmutter 2 wirkt hierbei über eine Überlastsicherungseinrichtung 11 auf eine Ventilstange 12 ein, die mit einem in der Zeichnung nicht dargestellten Thermostatelement und dem Mischventilglied verbunden ist. Auf dem Außenmantel der Stellmutter 2 ist eine Riefenverzahnung 22 angeordnet, die mit einer Haube 4 drehfest aber axial verschiebbar in Eingriff steht.

An dem Kopfstück 1 ist außerdem ein Anschlagring 3 mit Hilfe einer Riefenverzahnung 13 drehfest gehaltert. Zur Axialsicherung ist der Anschlagring 3 mit Rastzungen 33 versehen, die in eine umlaufende Ringnut 14 am Kopfstück 1 in der Stecklage eingreifen. Die Stellmutter 2 greift hierbei mit einem elastischen Bremsring 23 in eine zylindrische Bohrung 34 ein, so daß durch die Reibwirkung des Bremsrings 23 an der Wandung der Bohrung 34 eine bestimmte Schwergängigkeit der Stellmutter 2 erzeugt wird, so daß ein Selbstverstellungseffekt ausgeschaltet wird. Die Rastzungen 33 werden in der Stecklage von der aufgeschobenen Haube 4 verriegelt.

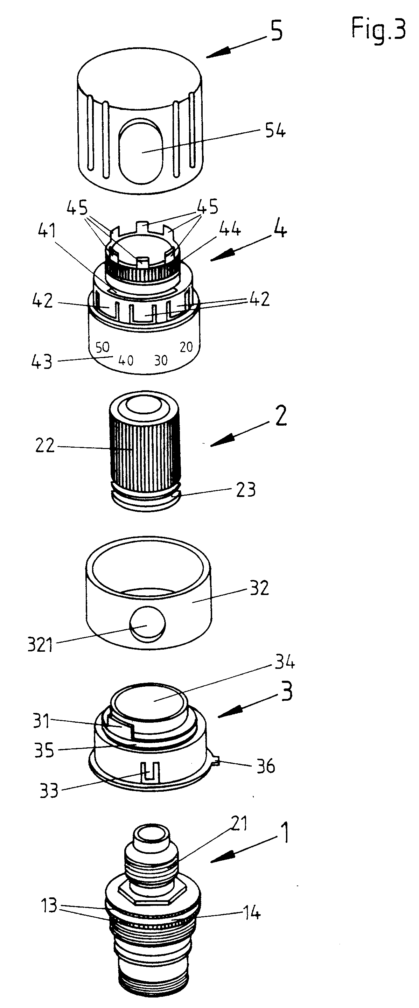

Zur Axialsicherung der Haube 4 greift diese mit Rastzungen 42 in eine umlaufende Ringnut 35 am Anschlagring 3 ein. Durch diese Anordnung ist die Haube 4 axial festliegend aber drehbar an dem Kopfstück 1 gehaltert, wobei sie drehfest mit der axial über das Gewinde 21 verschiebbaren Stellmutter 2 verbunden ist. An dem Anschlagring 3 ist eine Anschlagnase 31 ausgebildet, wie es insbesondere aus Figur 3 ersichtlich ist, welche sowohl im Zusammenwirken mit einem Anschlag 46 den maximalen Drehwinkel begrenzt als auch für ein, weiter unten näher beschriebenes, an einer Sicherheitstaste 54 ausgebildetes Ringsegment 52 das Gegenstück für einen lösbaren Anschlag 51 bildet.

Die Haube 4 ist dabei als dreistufige Hülse ausgebildet, wobei auf dem Bereich mit dem größten Durchmesser eine Skala 43 für die Temperaturanzeige, auf der mittleren Stufe die Rastzungen 42 und auf der im Durchmesser kleinsten Stufe am Außenumfang eine Riefenverzahnung 44 angeordnet, auf die eine Griffkappe 5 mit entsprechender Riefenverzahnung 44 aufschiebbar ist. In der Stecklage werden hierbei von der Griffkappe 5 die Rastzungen 42 in der Rastlage verriegelt, so daß ein Abziehen der Haube 4 vom Kopfstück 1 ausgeschlossen wird.

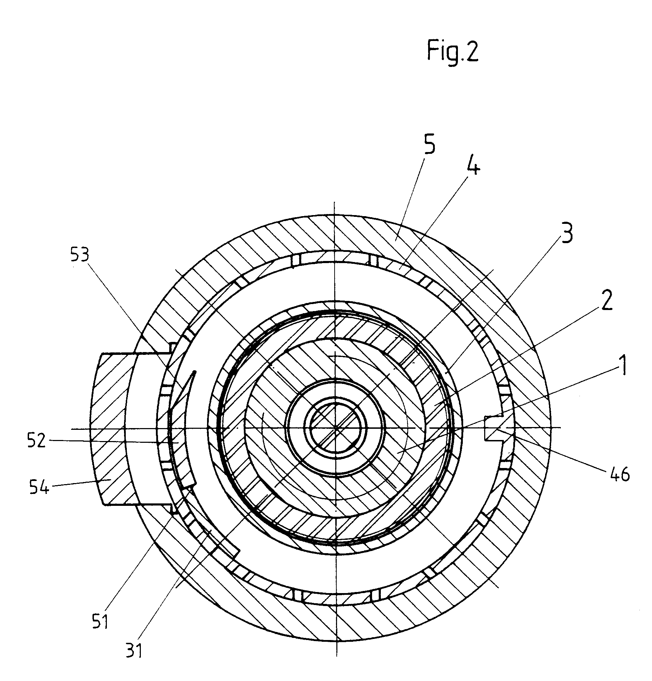

Im Mantelbereich der Griffkappe 5 ist die Sicherheitstaste 54 angeordnet, die vom Benutzer entgegen der Kraft einer Feder 55 radial nach innen verschoben werden kann. An der Sicherheitstaste 54 ist das Ringsegment 52 mit einem Anschlag 51 ausgebildet, der im zusammengefügten Zustand mit der Anschlagnase 31 des Anschlagrings 3 zusammenwirkt. Hierbei ist das Ringsegment 52 axial durch einen in der Stirnwand der Haube 4 ringförmig angeordneten Schlitz 41 hindurchgeführt. An der dem Anschlag 51 gegenüberliegenden Seite ist eine geschrägte Seitenfläche 53 an dem Ringsegment 52 ausgebildet, wie es insbesondere aus Figur 2 zu entnehmen ist. Durch diese geschrägte Seitenfläche 53 ist es ermöglicht, daß bei einer Rückstellung bzw. einem Rückdrehen der Griffkappe 5 das Ringsegment 52 der Sicherheitstaste 54 selbsttätig an der Anschlagnase 31 vorbeigleiten kann und der Anschlag nur in einer Drehrichtung wirksam ist.

Die Griffkappe 5 ist in der in Figur 1 gezeigten Position von Schnappzungen 45 in der Stecklage fixiert, so daß bei einer Drehbewegung diese auf die Haube 4 und von hier auf die Stellmutter 2 übertragen wird, die mit Hilfe des Gewindes 21 entsprechend der Drehbewegung in der axial feststehenden Griffanordnung, bestehend aus Haube 4 und Griffkappe 5, entsprechend axial verschoben wird und über einen Druckstift die axiale Stellbewegung auf die Ventilstange 12 überträgt.

Den Anschlagring 3 übergreift im wesentlichen Teil die Haube 4 mit der im Durchmesser größten Stufe, auf der die Skala 43 angeordnet ist. Auf dem Anschlagring 3 ist darüber hinaus ein Blendenring 32 drehfest fixiert, der die Skala 43 mit Spiel übergreift. An der dem Benutzer zugekehrten Seite ist in dem Blendenring 32 eine Öffnung 321 ausgebildet, an der die jeweils eingestellte Temperatur an der Sollwerteinstellvorrichtung abgelesen werden kann.

Die Sollwerteinstellvorrichtung kann in der in Figur 3 dargestellten Reihenfolge der Einzelteile zusammenmontiert werden. Hierbei wird zunächst auf das Kopfstück 1, welches aus dem in der Zeichnung nicht dargestellten Gehäuse des Mischventils hervorkragt, der Anschlagring 3 aufgesteckt und mit den Rastzungen 33 verrastet. Nunmehr kann der Blendenring 32 auf den Anschlagring 3 aufgesteckt und mit Hilfe eines Radialvorsprungs 36 drehfest mit dem Anschlagring 3 verbunden werden. Hiernach kann die Stellmutter 2 mit dem Bremsring 23 auf das Gewinde 21 aufgeschraubt werden, so daß der Bremsring 23 reibend von der Wandung der Bohrung 34 aufgenommen ist und ein selbsttätiges Verstellen verhindert.

Sodann kann die Haube 4 auf die Stellmutter 2 aufgeschoben und mit Hilfe der Rastzungen 42 axial festliegend mit dem Anschlagring 3 verbunden werden. Zum Abschluß wird die Griffkappe 5 mit der Sicherheitstaste 54 auf die Haube 4 aufgeschoben und in der Steckposition von den Schnappzungen 45 verrastet.

Nach einer vorangegangenen Justierung der Ventilstange 12 kann somit durch Drehung der Griffkappe 5 an der Öffnung 321 des Blendenrings 32 die jeweils eingestellte Mischwassertemperatur abgelesen werden. Die Lage und Größe des Schlitzes 41 in der Haube 4 bestimmt sowohl die Größe als auch die Lage des vorgegebenen Einstellbereichs, beispielsweise 30°C bis 50°C, des lösbaren Anschlags 51, da das Ringsegment 52 durch den Schlitz 41 hindurchgreift, um mit der Anschlagnase 31 zu korrespondieren.

Der lösbare Anschlag 51 kann auf eine gewünschte Temperatur, z.B. 45°C, eingestellt werden. Hierzu wird die gewünschte Temperatur mit der Griffkappe 5 am Blendenring 32 eingestellt und danach die Griffkappe 5 von der Haube 4 abgezogen und so verdreht wieder aufgesteckt, daß der Anschlag 51 an der Anschlagnase 31 anliegt. Nunmehr läßt sich die Griffkappe 5 nur bis zur eingestellten Temperatur, beispielsweise 45°C, verdrehen. Soll eine höhere Temperatur eingestellt werden, so muß mit der Sicherheitstaste 54 der Anschlag 51 radial soweit nach innen verschoben werden, daß er an der Anschlagnase 31 vorbeibewegt werden kann. Bei einem Rückstellen aus dem höheren Temperaturbereich wird das Ringsegment 52 mit dem Anschlag 51 durch die geschrägte Seitenfläche 53 selbsttätig nach innen ausgelenkt und die Rückführung in den unteren Temperaturbereich ermöglicht. Bei einem erneuten Hochstellen der Temperatur gelangt der Anschlag 51 wieder bei der vorbestimmten Temperatur an der Anschlagnase 31 zur Anlage.

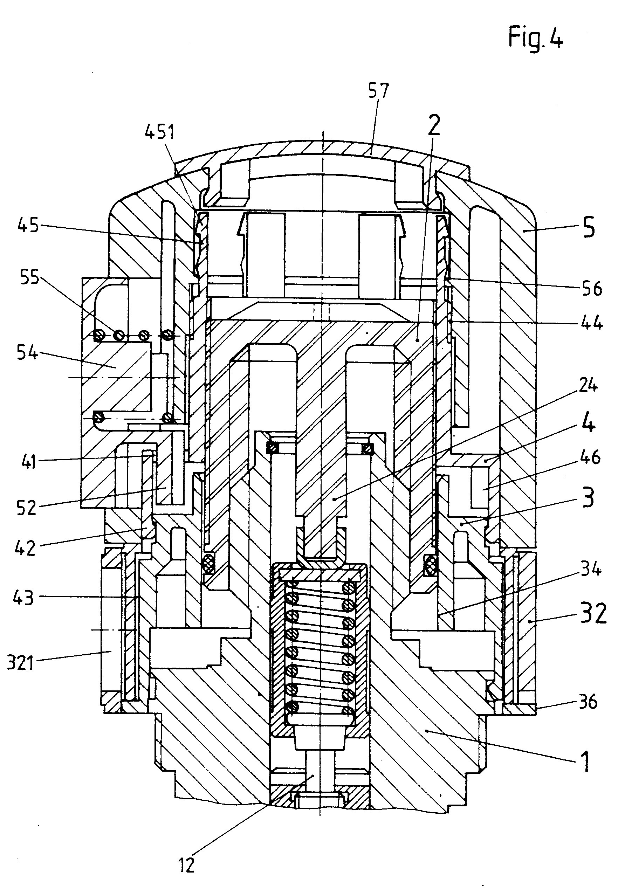

Bei dem in Figur 4 dargestellten Ausführungsbeispiel ist die Griffkappe 5 unverlierbar an der Haube 4 befestigt. Zu diesem Zweck sind die Schnappzungen 45 zweifach ausgebildet, so daß die Griffkappe 5 in zwei Axialpositionen auf der Haube 4 fixierbar ist. Zu diesem Zweck weist die Griffkappe 5 eine Anschlagschulter 56 auf, an der mit einer entsprechend rechtwinklig zur Mittelachse ausgebildeten Kante versehenen Schnappnasen 451 zur Anlage gelangen und ein völliges Abziehen der Griffkappe 5 verhindern. Die Schnappnasen 451 sind dabei so angeordnet, daß bei einer Anlage an die Anschlagschulter 56 die Griffkappe 5 außer Eingriff mit der Riefenverzahnung 44 ist und somit in dieser Position die Griffkappe 5 zur Haube 4 verdreht werden kann. Somit ist eine Neubestimmung der gewünschten lösbaren Temperaturbegrenzung möglich, ohne die Griffkappe 5 von der Haube 4 gänzlich abzuziehen. Damit eine Demontage der Stellvorrichtung möglich ist, ist an der Stirnseite der Grippkappe 5 eine mit einem Deckel 57 verschließbaren Öffnung vorgesehen. Im übrigen entspricht das Ausführungsbeispiel dem in Figur 1 bis 3 gezeigten.

## Patentansprüche

1. Sollwerteinstellvorrichtung an einem thermostatisch geregelten Mischventil für Kalt- und Warmwasser, mit einer auf einem feststehenden Kopfstück (1) mittels Gewinde (21) schraubbaren Stellmutter (2), auf der eine Haube (4) drehfest gehaltert ist, die mit einem feststehenden Anschlagring (3), der die maximale Drehbewegung begrenzt, und einer Skalenanordnung zusammenwirkt, wobei ein von Hand lösbarer Anschlag (51) als zusätzliche Drehbegrenzung und Temperaturbegrenzung vorgesehen ist, dadurch gekennzeichnet, daß
- die Haube (4) am Anschlagring (3) axial gehaltert ist und einen ringförmigen Schlitz (41) in einem Teilbereich einer von einer Durchmesserverringerung gebildeten Stirnseite trägt,
- an der Haube (4) eine Griffkappe (5) in verschiedenen Drehstellungen fixierbar ist,
- an der Griffkappe (5) ein von Hand durch eine Radialbewegung aus seiner Anschlagposition zu einer Anschlagnase (31) auslenkbarer Anschlag (51) vorgesehen ist, welcher durch den Schlitz (41) in der Haube (4) vorkragt und mit einer am Anschlagring (3) angeformten Anschlagnase (31) zusammenwirkt, wobei die Größe und die Lage des Einstellbereichs des lösbaren Anschlags (51) im wesentlichen von der Größe und der Lage des Schlitzes (41) vorgegeben ist.

2. Sollwerteinstellvorrichtung nach Anspruch 1, dadurch gekennzeichnet, daß die Haube (4) mit feststehenden Rastzungen (42) an dem Anschlagring (3) gehalten ist, die von der aufgesteckten Griffkappe (5) in der Stecklage verriegelt sind.

3. Sollwerteinstellvorrichtung nach Anspruch 1 oder 2, dadurch gekennzeichnet, daß die Haube (4) als dreigestufte Hülse ausgebildet ist, wobei an der im Durchmesser größten Stufe auf dem Umfang eine Skala (43) zur Temperaturanzeige, in der mittleren Stufe eine oder mehrere Rastzungen (42) und an der im Durchmesser kleinsten Stufe auf dem Außenumfang eine Riefenverzahnung (44) zur drehfesten Aufnahme der Griffkappe (5) vorgesehen ist.

4. Sollwerteinstellvorrichtung nach einem der Ansprüche 1 bis 3, dadurch gekennzeichnet, daß die Griffkappe (5) in der Stecklage auf der Haube (4) mittels Schnappzungen (45) gehalten ist.

5. Sollwerteinstellvorrichtung nach einem der Ansprüche 1 bis 4, dadurch gekennzeichnet, daß die Griffkappe (5) auf der Haube (4) axial gegen ein unbeabsichtigtes Abziehen gesichert ist, wobei in einer ersten Axialposition eine drehfeste und in einer zweiten Axialposition eine drehbare Verbindung zur Haube (4) vorgesehen ist.

6. Sollwerteinstellvorrichtung nach einem der Ansprüche 1 bis 5, dadurch gekennzeichnet, daß der lösbare Anschlag (51) an einem in den Schlitz (41) eingreifenden Ringsegment (52) ausgebildet ist, an dessen dem Anschlag (51) gegenüberliegenden Seite eine geschrägte Seitenfläche (53) vorgesehen ist, so daß beim Rückdrehvorgang das Ringsegment (52) durch die geschrägte Seitenfläche (52) selbsttätig radial verschoben werden und an der Anschlagnase (31) vorbeigleiten kann.

7. Sollwerteinstellvorrichtung nach Anspruch 6, dadurch gekennzeichnet, daß das Ringsegment (52) an einer Sicherheitstaste (54) ausgebildet ist, die radial entgegen der Kraft einer Feder (55) begrenzt verschiebbar in der Griffkappe (5) angeordnet ist.

8. Sollwerteinstellvorrichtung nach einem der Ansprüche 1 bis 7, dadurch gekennzeichnet, daß auf dem Anschlagring (3) ein Blendenring (32) drehfest angeordnet ist, der mit der Skala (43) zusammenwirkt, wobei an dem Blendenring (32) eine Öffnung (321) zur Anzeige der eingestellten Temperatur vorgesehen ist.

9. Sollwerteinstellvorrichtung nach einem der Ansprüche 1 bis 7, dadurch gekennzeichnet, daß wenigstens die Haube (4) aus Kunststoff hergestellt ist.

## Claims

1. Desired value setting device for a thermostatically controlled mixing valve for cold and hot water, having an adjusting nut (2) that can be screwed on a fixed-position head part (1) by means of a screw thread (21) and on which there is non-rotatably secured a cap (4) which co-operates with a fixed-position stop ring (3), which limits the maximum rotational movement, and a scale arrangement, a manually releasable stop member (51) being provided as an additional rotation limiting and temperature limiting means, characterised in that
- the cap (4) is axially secured on the stop ring (3) and bears an annular slot (41) in a part of an axially directed face formed by a reduction in diameter,
- on the cap (4) a grip cap (5) can be fixed in various rotational positions,
- on the grip cap (5) there is provided a stop member (51) which can be deflected manually by means of a radial movement from its stop position against a stop lug (31), and which projects through the slot (41) in the cap (4) and cooperates with a stop lug (31) integrally formed on the stop ring (3), the magnitude and position of the range of adjustment of the releasable stop member (51) being substantially predetermined by the size and position of the slot (41).

2. Desired value setting device according to claim 1, characterised in that the cap (4) is secured on the stop ring (3) by fixed-position locking tongues (42) which are locked in the engaged positidn by the grip cap (5) placed on top.

3. Desired value setting device according to claim 1 or 2, characterised in that the cap (4) is in the form of a sleeve with three steps, there being provided on the periphery of the step having the largest diameter a scale (43) for temperature indication, in the middle step one or more locking tongues (42), and on the outer periphery of the step having the smallest diameter, grooved toothing (44) to receive the grip cap (5) so that it is fixed against relative rotation.

4. Desired value setting device according to one of claims 1 to 3, characterised in that the grip cap (5) is held in the engaged position on the cap (4) by means of snap-in tongues (45).

5. Desired value setting device according to one of claims 1 to 4, characterised in that the grip cap (5) is secured axially on the cap (4) against being pulled off accidentally, there being provided in a first axial position a non-rotatable, and in a second axial position a rotatable connection to the cap (4).

6. Desired value setting device according to one of claims 1 to 5, characterised in that the releasable stop member (51) is formed on an annular segment (52) engaging in the slot (41) and having an oblique side face (53) provided on the opposite side from the stop member (51), so that during the reverse rotation operation the annular segment (52) is automatically displaced radially by means of the oblique side face (52) and can slide past the stop lug (31).

7. Desired value setting device according to claim 6, characterised in that the annular segment (52) is formed on a safety button (54) which is arranged to be displaced to a limited degree in the grip cap (5) radially against the force of a spring (55).

8. Desired value setting device according to one of claims 1 to 7, characterised in that on the stop ring (3) there is non-rotatably arranged a mask ring (32) which cooperates with the scale (43), an opening (321) being provided in the mask ring (32) for indication of the temperature that has been set.

9. Desired value setting device according to one of claims 1 to 7, characterised in that at least the cap (4) is produced from plastics material.

## Revendications

1. Dispositif de réglage d'une valeur de consigne d'une soupape de mitigeur thermostatique pour de l'eau froide et de l'eau chaude, comportant un écrou de réglage (2) vissé par un filetage (21) sur une tête (1) fixe, filetage qui porte solidairement en rotation une coiffe (4) coopérant avec une bague de butée (3) fixe limitant le mouvement de rotation maximum et une graduation, une butée (51) desserrable à la main servant de moyen supplémentaire pour limiter la température et la rotation, caractérisé en ce que :
- la coiffe (4) est maintenue axialement contre la bague de butée (3) et comporte une fente annulaire (41) dans une zone partielle d'une face frontale, formée par une réduction de diamètre,
- un capuchon formant poignée (5) peut se fixer dans différentes positions de rotation sur la coiffe (4),
- le capuchon formant poignée (5) comporte une butée (51) qui peut être sortie manuellement, par un mouvement radial, à partir de sa position de butée contre un bec de butée (31), et cette butée vient en saillie à travers la fente (41) dans la coiffe (4) et coopère avec un bec de butée (31) formé sur la bague de butée (3), la dimension et la position de la plage de réglage de la butée amovible (51) étant prédéterminées essentiellement par la dimension et la position de la fente (41).

2. Dispositif de réglage d'une valeur de consigne selon la revendication 1, caractérisé en ce que la coiffe (4) est maintenue sur la bague de butée (3) par des languettes d'encliquetage (42), fixes, et qui sont verrouillées en position engagée par l'emmanchement du capuchon formant poignée (5).

3. Dispositif de réglage d'une valeur de consigne selon la revendication 1 ou 2, caractérisé en ce que la coiffe (4) est une douille à trois gradins, le gradin de plus grand diamètre portant à sa périphérie une échelle (43) pour l'affichage de la température, le gradin moyen comportant une ou plusieurs languettes d'encliquetage (42) et le gradin de plus petit diamètre comportant à sa périphérie extérieure une denture molletée (44) pour recevoir solidairement en rotation, le capuchon formant poignée (5).

4. Dispositif de réglage d'une valeur de consigne selon l'une des revendications 1 à 3, caractérisé en ce que le capuchon formant poignée (5) est maintenu en position emmanchée sur la coiffe (4) par des languettes d'encliquetage (45).

5. Dispositif de réglage d'une valeur de consigne selon l'une des revendications 1 à 4, caractérisé en ce que le capuchon formant poignée (5) est fixé axialement contre toute extraction accidentelle sur la coiffe (4) et dans une première position axiale, on a une liaison solidaire en rotation par rapport à la coiffe (4) et dans une seconde position axiale, on a une autre position solidaire en rotation.

6. Dispositif de réglage d'une valeur de consigne selon l'une des revendications 1 à 5, caractérisé en ce que la butée amovible (51) est réalisée sur un segment annulaire (52) pénétrant dans la fente (41), et dont le côté opposé à la butée (51) comporte une surface latérale (53) inclinée de façon que pour la rotation en sens inverse, le segment annulaire (52) soit déplacé radialement, automatiquement par la surface latérale inclinée (52) et puisse passer sur le bec de butée (31).

7. Dispositif de réglage d'une valeur de consigne selon la revendication 6, caractérisé en ce que le segment annulaire (52) est réalisé sur un bouton de sécurité (54) qui peut être coulissé radialement, de manière limitée, contre la force développée par un ressort (55), dans le capuchon formant poignée (5).

8. Dispositif de réglage selon l'une des revendications 1 à 7, caractérisé en ce qu'une bague formant cache (32) est montée solidairement en rotation sur la bague de butée (3), cette bague (32) coopérant avec la graduation (43) étant munie d'une ouverture (321) pour afficher la température réglée.

9. Dispositif de réglage selon l'une des revendications 1 à 7, caractérisé en ce qu'au moins la coiffe (4) est en matière plastique.
